# EUROPEAN PATENT APPLICATION

(11) **EP 4 498 507 A1**
(43) Date of publication of application: **29.01.2025**
(21) Application number: 24185544.4
(22) Date of filing: 28.06.2024
(51) Int. Cl.: H01M 50/579, H01M 50/533, H01M 50/54, H01M 50/536, H01M 50/55, H01M 50/553, H01M 50/586, H01M 50/595, H01M 50/105

(54) **ELECTROCHEMICAL DEVICE AND ELECTRICAL DEVICE**

(30) Priority: 27.07.2023 CN 202310936246
(71) Applicant: Ningde Amperex Technology Limited, Zhangwan Town, Jiaocheng District Ningde City Fujian 352100 (CN); Dongguan Amperex Technology Limited, Dongguan City, Guangdong Province 523000 (CN)
(72) Inventor: MING, Bangsheng, Ningde City, Fujian Province, People s Republic of China, 352100 (CN); HU, Kewen, Ningde City, Fujian Province, People s Republic of China, 352100 (CN)
(74) Representative: Icosa

(57) **Abstract**

An electrochemical device (1) includes a package (10), an electrode assembly (20), and a first adapter piece (31). The electrode assembly (20) includes a first tab group (24). The first tab group (24) is electrically connected to the electrode assembly (20). The first tab group (24) is electrically connected to the first adapter piece (31) to form a first connecting portion (247). The first adapter piece (31) extends out of the package (10). A part that, in the first tab group (24), electrically connects the electrode assembly (20) and the first connecting portion (247), includes at least a first bent section (243) and a second bent section (244). The first bent section (243) and the second bent section (244) are bent in opposite directions.

## Description

### BACKGROUND

### 1. Technical Field

This application relates to the field of battery technology, and in particular, to an electrochemical device and an electrical device.

### 2. Description of the Related Art

In lithium-ion and sodium-ion secondary batteries and other types of secondary batteries, a multi-tab structure can improve a fast-charge capability of the battery, shorten a transmission path of lithium ions, and also reduce an internal resistance and a charge-discharge temperature increment of the battery. The multi-tab structure needs to be formed by interconnection welding, and one electrode terminal needs to be led out to serve as an electrode for charging the battery from an external power source or discharging the battery to provide electrical energy outward.

The secondary battery of a multi-tab structure, because the electrode terminal directly extends out of a package after being welded to a plurality of tabs, the multi-tab structure in the package possesses a low degree of freedom for lack of a cushion structure. When the multi-tab structure is dropped, vibrating, or tugged during production or actual use, the plurality of tabs in the package are prone to be fractured under stress or incur other problems, thereby leading to failure of safety.

### SUMMARY

An objective of this application is to provide an electrochemical device and an electrical device to alleviate the problem that tabs in a multi-tab structure in a package are prone to break.

One technical solution of this application is to provide an electrochemical device. The electrochemical device includes a package, an electrode assembly, and a first adapter piece. The electrode assembly includes a first tab group. The electrode assembly is accommodated in the package. A first end of the first tab group is electrically connected to the electrode assembly. A second end of the first tab group is electrically connected to a first end of the first adapter piece to form a first connecting portion. A second end of the first adapter piece extends out of the package. A part that, in the first tab group, electrically connects the electrode assembly and the first connecting portion, includes at least a first bent section and a second bent section. The first bent section and the second bent section are bent in opposite directions.

In some embodiments, the electrode assembly includes a plurality of first electrode plates, a plurality of separators, and a plurality of second electrode plates. Each of the separators is disposed between one of the first electrode plates and one of the second electrode plates. The first tab group includes a plurality of first sub-tabs. One of the first sub-tabs is electrically connected to one of the first electrode plates. The plurality of first sub-tabs are stacked together to form a first stacked portion. The first stacked portion is bent to form the first bent section and the second bent section.

In some embodiments, the first tab group further includes a first connecting section and a second connecting section. The first bent section, the first connecting section, the second bent section, the second connecting section, and the first adapter piece are connected in sequence. Of the first bent section and the second bent section, one is bent along a first direction, and the other is bent along a second direction. The first direction is opposite to the second direction.

In some embodiments, a length of the first connecting section is greater than or equal to a length of the second connecting section.

In some embodiments, the electrochemical device further includes a first adhesive-sealant. The first adhesive-sealant is disposed on the first adapter piece. The first adhesive-sealant is configured to seal the first adapter piece and the package.

In some embodiments, a length L1 of the first adapter piece located between the first connecting portion and the first adhesive-sealant satisfies: 0.2 mm ≤ L1 ≤ 10 mm.

In some embodiments, the electrochemical device further includes a first insulation tape group. The first insulation tape group covers the first tab group and the first adapter piece that is located between the first adhesive-sealant and the first tab group. The first insulation tape group further covers a part of the electrode assembly, and covers a part of the first adhesive-sealant.

In some embodiments, the electrochemical device further includes a second adapter piece. The electrode assembly further includes a second tab group. A first end of the second tab group is electrically connected to the electrode assembly. A second end of the second tab group is electrically connected to a first end of the second adapter piece to form a second connecting portion. A second end of the second adapter piece extends out of the package. A part that, in the second tab group, electrically connects the electrode assembly and the second connecting portion, includes at least a third bent section and a fourth bent section. The third bent section and the fourth bent section are bent in opposite directions.

In some embodiments, the electrode assembly includes a plurality of first electrode plates, a plurality of separators, and a plurality of second electrode plates. Each of the separators is disposed between one of the first electrode plates and one of the second electrode plates. The second tab group includes a plurality of second sub-tabs. One of the second sub-tabs is electrically connected to one of the second electrode plates. The plurality of second sub-tabs are stacked together to form a second stacked portion. The second stacked portion is bent to form the third bent section and the fourth bent section.

Another technical solution disclosed in an embodiment of this application is to provide an electrical device. The electrical device includes the electrochemical device disclosed above.

The electrochemical device of this application includes a package, an electrode assembly, and a first adapter piece. The electrode assembly is accommodated in the package. The electrode assembly includes a first tab group. A first end of the first tab group is electrically connected to the electrode assembly. The first tab group is electrically connected to a first end of the first adapter piece to form a first connecting portion. A second end of the first adapter piece extends out of the package. A part that, in the first tab group, electrically connects the electrode assembly and the first connecting portion, includes at least a first bent section and a second bent section. The first bent section and the second bent section are bent in opposite directions, so that the first tab group located inside the package is substantially in the shape of an "S".

With the first tab group designed into the above structure, the first tab group that includes a first bent section and a second bent section is stretchable in a specified space when the electrode assembly moves relative to the package during abnormal use such as dropping or violent impact of the electrochemical device, so that the electrode assembly keeps electrically connected to the first adapter piece. The first tab group can cushion and reduce the stress transmitted from the first adapter piece to the electrode assembly, so as to reduce the probability of breakage at the junction between the first tab group and the electrode assembly.

### BRIEF DESCRIPTION OF DRAWINGS

To describe the technical solutions of this application more clearly, the following outlines the drawings to be used in some embodiments of this application. In all the drawings, similar elements or parts are generally identified by similar reference numerals. The elements or parts in the drawings are not necessarily drawn to scale.
FIG. 1 is a perspective view of an electrochemical device according to an embodiment of this application;
FIG. 2 is a cross-sectional view of an electrochemical device sectioned along an A-A line shown in FIG. 1 according to an embodiment of this application;
FIG. 3 is a cross-sectional view of an electrochemical device sectioned along an A-A line shown in FIG. 1 with an unbent first adapter piece according to an embodiment of this application;
FIG. 4 is a cross-sectional view of an electrochemical device sectioned along an A-A line shown in FIG. 1 according to another embodiment of this application;
FIG. 5 is a cross-sectional view of an electrochemical device containing a first insulation tape group and sectioned along an A-A line shown in FIG. 1 according to another embodiment of this application;
FIG. 6 is a cross-sectional view of an electrochemical device sectioned along a B-B line shown in FIG. 1 according to an embodiment of this application;
FIG. 7 is a cross-sectional view of an electrochemical device containing no bent section and sectioned along an A-A line shown in FIG. 1 in the prior art; and
FIG. 8 is a cross-sectional view of an electrochemical device containing merely a first bent section and sectioned along an A-A line shown in FIG. 1 in the prior art.

### DETAILED DESCRIPTION

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. A direction or a positional relationship indicated by the terms such as "up", "down", "in", "out", "vertical", and "horizontal" used herein is a direction or positional relationship based on the illustration in the drawings, and is merely intended for ease or brevity of describing this application, but does not indicate or imply that the indicated device or component is necessarily located in the specified direction or constructed or operated in the specified direction. Therefore, such terms are not construed as a limitation on this application. In addition, the terms "first" and "second" are merely used for descriptive purposes, but not construed as indicating or implying relative importance.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

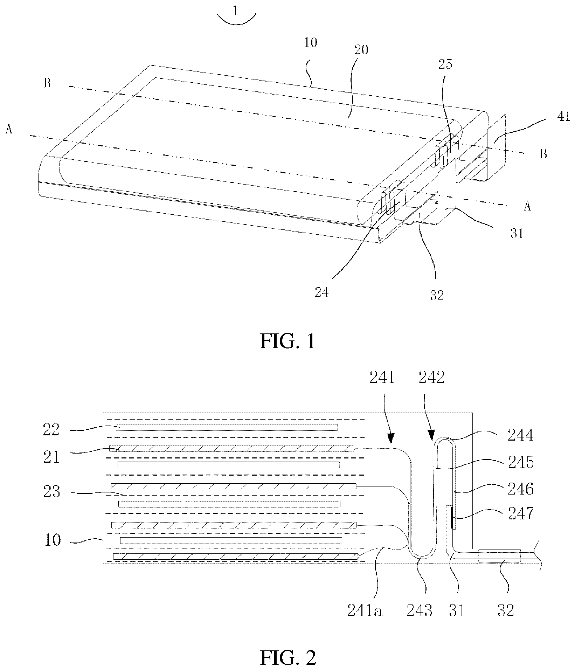

Referring to FIG. 1, the electrochemical device 1 of this application includes a package 10, an electrode assembly 20, and a first adapter piece 31. The electrode assembly 20 is accommodated in the package 10. The first adapter piece 31 is electrically connected to the electrode assembly 20. At least a part of the first adapter piece 31 extends out of the package 10 to form one of electrodes of the electrochemical device 1.

The package 10 may be a soft packaging bag made of an aluminum laminated film, or a square aluminum shell or a cylindrical aluminum shell made of a rigid aluminum sheet.

As an example, still referring to FIG. 1, the electrode assembly 20 includes a first tab group 24. A first end of the first tab group 24 is electrically connected to the electrode assembly 20. A second end of the first tab group 24 is electrically connected to a first end of the first adapter piece 31 to form a first connecting portion 247. A second end of the first adapter piece 31 extends out of the package 10.

In other embodiments, alternatively, the first end of the first tab group 24 is electrically connected to the electrode assembly 20, and a non-end part of the first tab group 24 is electrically connected to the first end of the first adapter piece 31. To be specific, a part between the first end and the second end of the first tab group 24 is welded to the first end of the first adapter piece 31 to form a first connecting portion 247. The second end of the first tab group 24 is a free end.

Referring to FIG. 2, a part that, in the first tab group 24, electrically connects the electrode assembly 20 and the first connecting portion 247, includes at least a first bent section 243 and a second bent section 244. The first bent section 243 and the second bent section 244 are bent in opposite directions, so that the first tab group 24 located inside the package 10 is substantially in the shape of an "S".

With the first tab group 24 designed into the above structure, the first tab group 24 that includes a first bent section 243 and a second bent section 244 is stretchable in a specified space when the electrode assembly 20 moves relative to the package 10 during abnormal use such as dropping or violent impact of the electrochemical device 1, so that the electrode assembly 20 keeps electrically connected to the first adapter piece 31. The first tab group 24 can cushion and reduce the stress transmitted from the first adapter piece 31 to the electrode assembly 20, so as to reduce the probability of breakage at the junction between the first tab group 24 and the electrode assembly 20.

For the above electrode assembly 20, referring to FIG. 2, the electrode assembly 20 includes a first electrode plate 21, a second electrode plate 22, and a separator 23. The separator 23 is disposed between the first electrode plate 21 and the second electrode plate 22. In some embodiments, the polarity of the first electrode plate 21 is opposite to the polarity of the second electrode plate 22. For example, when the first electrode plate 21 is a positive electrode plate, the second electrode plate 22 is a negative electrode plate; or, when the first electrode plate 21 is a negative electrode plate, the second electrode plate 22 is a positive electrode plate. When a plurality of first electrode plates 21 and a plurality of second electrode plates 22 are disposed, the first electrode plates 21 and the second electrode plates 22 are disposed alternately. The separator 23 is configured to separate the first electrode plate 21 from the second electrode plate 22. The electrode assembly 20 may be a stacked-type electrode assembly 20 or a jelly-roll electrode assembly 20.

Referring to FIG. 1 and FIG. 2, the electrode assembly 20 includes a first tab group 24. A first end of the first tab group 24 is electrically connected to the first electrode plate 21. A second end of the first tab group 24 is electrically connected to the first adapter piece 31. A part that, in the first tab group 24, electrically connects the electrode assembly 20 and the first connecting portion 247, includes a first bent section 243 and a second bent section 244. The first bent section 243 and the second bent section 244 are bent in opposite directions. In some embodiments, the first tab group 24 further includes a first connecting section 245 and a second connecting section 246. The first connecting section 245 connects the first bent section 243 and the second bent section 244. The second connecting section 246 connects the second bent section 244 and the first adapter piece 31.

As a result of the above structural configuration, for example, in FIG. 2, the first tab group 24 is stretchable in a space in the left-right direction. In this way, when the electrode assembly 20 moves relatively inside the package 10 in the left-right direction, the first tab group 24 can extend or retract in the left-right direction, so that the first tab group 24 can maintain the electrical connection between the electrode assembly 20 and the first adapter piece 31.

In some embodiments, referring to FIG. 2, the first tab group 24 includes a plurality of first sub-tabs 241. The first sub-tabs 241 are electrically connected to the first electrode plate 21. The plurality of first sub-tabs 241 are stacked together to form a first stacked portion 242. The first stacked portion 242 is bent at least twice in opposite directions to form the first bent section 243 and the second bent section 244. For example, as shown in FIG. 2, the first stacked portion 242 is bent counterclockwise to form the first bent section 243, and then the first stacked portion 242 extends upward to form a first connecting section 245. Subsequently, the first stacked portion is bent clockwise to form a second bent section 244. Afterward, the first stacked portion 242 extends downward to form a second connecting section 246. The second connecting section 246 is connected to the first adapter piece 31.

In some embodiments, the first connecting section 245 and the second connecting section 246 may be in a flat straight state (as shown in FIG. 2) or in a wavy state. This application is described by an example in which the first connecting section 245 and the second connecting section 246 are in a flat straight state.

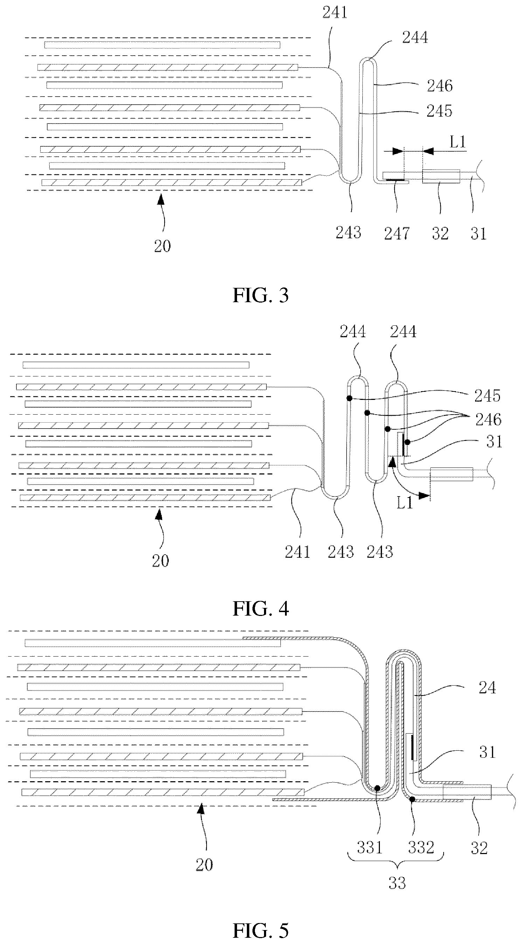

In an example, referring to FIG. 3, an extension length of the first connecting section 245 is equal to an extension length of the second connecting section 246. Setting the first connecting section 245 and the second connecting section 246 to be of the same length facilitates the processing and manufacturing of the first tab group 24. It is worth noting that the extension length is deemed to be equal between the first connecting section and the second connecting section as long as a difference between the extension length of the first connecting section 245 and the extension length of the second connecting section 246 in this application is controlled to be 1 mm or less.

In another example, referring to FIG. 2 and FIG. 4, the extension length of the first connecting section 245 is greater than the extension length of the second connecting section 246. With the above setting, when the electrochemical device 1 is subjected to an external stress, the electrode assembly 20 moves relative to the package 10. Because the length of the first connecting section 245 is greater, the external stress borne by the first tab group 24 may be reduced to provide the best protection effect.

Specifically, referring to FIG. 2, because the strength and rigidity of the first adapter piece 31 are relatively great, the deformation amount of the first adapter piece 31 is extremely small. Because the strength and rigidity of the first tab group 24 are relatively small, the first tab group is prone to deform. When the electrochemical device 1 is subjected to an external stress, the tensile stress borne by the second connecting section 246 and the first adapter piece 31 is relatively large in the vicinity of the first connecting portion 247. Under the action of the first bent section 243 and the second bent section 244, the stress transmitted to the electrode assembly 20 from the second connecting section 244 decreases gradually. The length of the first connecting section 243 is greater than the length of the second connecting section 244, thereby further reducing the stress transmitted to the electrode assembly 20.

In other embodiments, because the stress borne by the second connecting section 244 is greater than that borne by the first connecting section 243, the strength and rigidity of the second connecting section 244 may be set to be higher than those of the first connecting section 243.

Referring to FIG. 4, when the number of first bent sections 243 and the number of second bent sections 244 are two or more, the number of first connecting sections 245 and the number of second connecting sections 246 correspond to such numbers so that the bent sections can be connected to the connecting sections alternately. Referring to FIG. 4, the first bent section 243, the first connecting section 245, the second bent section 244, the second connecting section 246, the first bent section 243, the second connecting section 246, the second bent section 244, and the second connecting section 246 are connected sequentially. Finally, the second connecting section 246 is welded to the first adapter piece 31.

In some embodiments, the number of first sub-tabs 241 is equal to the number of first electrode plates 21, and one first sub-tab 241 is electrically connected to each first electrode plate 21. The first sub-tab 241 may be welded to the first electrode plate 21 to form an electrical connection, or, the first sub-tab 241 and the first electrode plate 21 formed in one piece by cutting.

In some other embodiments, the number of first sub-tabs 241 is greater than the number of first electrode plates 21, and at least one first sub-tab 241 is electrically connected to each first electrode plate 21. In other words, two first sub-tabs 241 are electrically connected to one of the first electrode plates 21. The above setting can further reduce the probability that the first sub-tab 241 or the first electrode plate 21 connected to the first sub-tab breaks off and the breakage leads to failure of the first electrode plate 21.

Because the first adapter piece 31 serves as a current output electrode or a current input electrode of the electrochemical device 1, the flow capacity of the first adapter piece 31 needs to be greater than or equal to the flow capacity of the first tab group 24. Further, the thickness of the first sub-tab 241 is much smaller than the thickness of the first adapter piece 31, and the thickness of the first stacked portion 242 formed by stacking a plurality of first sub-tabs 241 is also smaller than or equal to the thickness of the first adapter piece 31. This means that the strength and rigidity of the first adapter piece 31 are greater than the strength and rigidity of the first tab group 24. Therefore, during manufacturing and processing, the first bent section 243 and the second bent section 244 can be easily formed by bending the first stacked portion 242 of the first tab group 24. In addition, the rigidity of the first tab group 24 is low, so that the first tab group 24 is stretchable in an ample space.

In some embodiments, referring to FIG. 2, a plurality of first sub-tabs 241 are stacked to form a first stacked portion 242. In order to reduce the probability that the first sub-tab 241a close to the first bent portion 243 is prone to break off from the corresponding first electrode plate 21 in the process of bending the first stacked portion 242 to form the first bent section 243, the first sub-tab 241a close to the first bent section 243 in FIG. 2 needs to be bent. The above setting provides a margin of space for the first sub-tab 241a to deform, and avoids the formation of a rigid tensile connection between the first sub-tab 241a and the first stacked portion 242.

The second end of the first tab group 24 and the first end of the first adapter piece 31 may be electrically connected by welding, bonding, or other means of connection. This application is described by using an example in which the means of connection is welding. Referring to FIG. 1 and FIG. 2, the second end of the first tab group 24 is welded to the first end of the first adapter piece 31 to form a first connecting portion 247. In an embodiment of this application, the electrochemical device 1 further includes a first adhesive-sealant 32. The first adhesive-sealant 32 is disposed on the first adapter piece 31. The first adhesive-sealant 32 is connected to the package 10 and the first adapter piece 31 separately. The first adhesive-sealant 32 is configured to seal a gap between the first adapter piece 31 and the package 10, thereby ensuring airtightness inside the package 10.

The first adhesive-sealant 32 may be made of any sealing material available in the prior art and suitable for sealing the gap between the adapter piece and the package 10. The material of the first adhesive-sealant 32 is not limited herein. For example, the material of the first adhesive-sealant 32 may be polyethylene (PE), polypropylene (PP), or the like.

In some embodiments, a length L1 of the first adapter piece 31 located between the first connecting portion 247 and the first adhesive-sealant 32 satisfies: 0.2 mm ≤ L1 ≤ 10 mm.

Referring to FIG. 3, when the first adapter piece 31 is not bent, the length L1 of the first adapter piece 31 located between the first connecting portion 247 and the first adhesive-sealant 32 satisfies: 0.2 mm ≤ L1 ≤ 3 mm. When the first adapter piece 31 is electrically connected in a straight state to the second end of the first tab group 24, the space occupied by the first adapter piece 31 in the package 10 can be reduced by shortening the length of the first adapter piece 31 between the first connecting portion 247 and the first adhesive-sealant 32.

Referring to FIG. 4, when the first adapter piece 31 is bent, the length L1 of the first adapter piece 31 located between the first connecting portion 247 and the first adhesive-sealant 32 satisfies: 3 mm ≤ L1 ≤ 10 mm. When the first adapter piece 31 located in the package 10 is bent and then electrically connected to the first tab group 24, the length of the first adapter piece 31 may be increased by an appropriate amount. By bending the first adapter piece 31 located in the package 10 and then connecting the first adapter piece to the first tab group 24, the welding area of the first connecting portion 247 can be increased, so as to ensure firmness of the connection between the first adapter piece 31 and the first tab group 24. The first adapter piece 31 is bent, so as to reduce occupation of the space inside the package 10.

In an embodiment in which the first adapter piece 31 is bent and then electrically connected to the first tab group 24, as shown in FIG. 2 and FIG. 4, the first end of the first adapter piece 31 is closer to the electrode assembly 20 than the second end of the first tab group 24. The second bent section 244 is disposed on the first tab group 24, which means that a clearance exists between the first connecting section 245 and the second connecting section 246. By placing the first adapter piece 31 on a side closer to the electrode assembly 20, this application can fully utilize the clearance, and further reduce the space occupied by the first adapter piece 31 and the first tab group 24 inside the package 10.

Referring to FIG. 5, the electrochemical device 1 further includes a first insulation tape group 33. The first insulation tape group 33 covers at least the first tab group 24 and the first adapter piece 31 that is located between the first adhesive-sealant 32 and the first tab group 24, that is, covers the first tab group 24 and the first adapter piece 31 that is located inside the package 10. The first insulation tape group 33 is configured to wrap the first tab group 24 and the first adapter piece 31 that is located inside the package 10, so as to insulate the first tab group and the first adapter piece from the package 10, and avoid an electrical leak caused by electrical conduction between the first tab group or the first adapter piece and the package 10.

The first insulation tape group 33 may further cover a part of the electrode assembly 20 and a part of the first adhesive-sealant 32. The above settings can further enhance the insulation effect on the first tab group 24 and the first adapter piece 31 located in the package 10, increase the firmness of bonding of the first insulation tape group 33, and avoid detachment and failure of the first insulation tape group 33.

In some embodiments, the first insulation tape group 33 includes a first adhesive tape 331 and a second adhesive tape 332. The first adhesive tape 331 covers a surface of the first tab group 24 and the first adapter piece 31 on one side, and the second adhesive tape 332 covers a surface of the first tab group 24 and the first adapter piece 31 on the other side. The coverage of both the first adhesive tape 331 and the second adhesive tape 332 goes beyond the contours of the first tab group 24 and the first adapter piece.

Referring to FIG. 1, the electrochemical device 1 of this application further includes a second adapter piece 41. The second adapter piece 41 is electrically connected to the electrode assembly 20. At least a part of the second adapter piece extends out of the package 10 to form another electrode of the electrochemical device 1. For example, the first adapter piece 31 is a positive electrode, and the second adapter piece 41 is a negative electrode; or, the first adapter piece 31 is a negative electrode, and the second adapter piece 41 is a positive electrode.

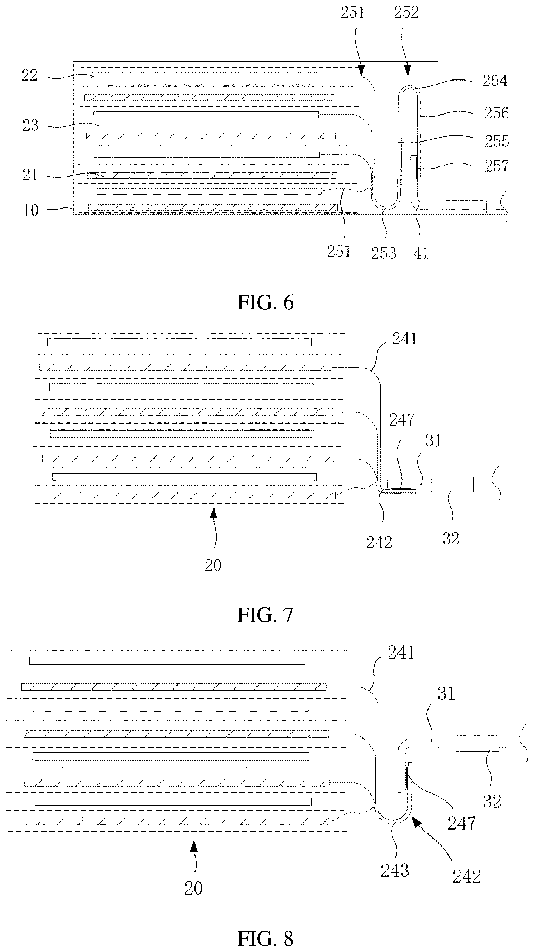

As an example, referring to FIG. 6, the electrode assembly 20 further includes a second tab group 25. A first end of the second tab group 25 is electrically connected to the electrode assembly 20. A second end of the second tab group 25 is electrically connected to a first end of the second adapter piece 41 to form a second connecting portion 257. A second end of the first adapter piece 31 extends out of the package 10. Understandably, the structure of the second tab group 25 may be a tab structure designed in the prior art, and the structure of the second tab group 25 may be the same as or similar to the structure of the first tab group 24. The latter is described herein as an example.

In other embodiments, alternatively, the first end of the second tab group 25 is electrically connected to the electrode assembly 20, and a non-end part of the second tab group 25 is electrically connected to the first end of the second adapter piece 41 to form a second connecting portion 257. To be specific, a part between the first end and the second end of the second tab group 25 is welded to the first end of the second adapter piece 41 to form the second connecting portion 257. The second end of the second tab group 25 is a free end.

Referring to FIG. 6, a part that, in the second tab group 25, electrically connects the electrode assembly 20 and the second connecting portion 257, includes at least a third bent section 253 and a fourth bent section 254. The third bent section 253 and the fourth bent section 254 are bent in opposite directions, so that the second tab group 25 located inside the package 10 is substantially in the shape of an "S".

With the second tab group 25 designed into the above structure, the second tab group 25 that includes a third bent section 253 and a fourth bent section 254 is stretchable in a specified space when the electrode assembly 20 moves relative to the package 10 during abnormal use such as dropping or violent impact of the electrochemical device 1, so that the electrode assembly 20 keeps electrically connected to the second adapter piece 41. The second tab group 25 can cushion and reduce the stress transmitted from the second adapter piece 41 to the electrode assembly 20, so as to reduce the probability of breakage at the junction between the second tab group 25 and the electrode assembly 20.

Referring to FIG. 6, in some embodiments, the second tab group 25 further includes a third connecting section 255 and a fourth connecting section 256. The third connecting section 255 connects the third bent section 253 and the fourth bent section 254. The fourth connecting section 256 connects the fourth bent section 254 and the second adapter piece 41.

Referring to FIG. 6, in some embodiments, the second tab group 25 includes a plurality of second sub-tabs 251. The second sub-tabs 251 are electrically connected to the second electrode plate 22. The plurality of second sub-tabs 251 are stacked together to form a second stacked portion 252. The second stacked portion 252 is bent at least twice in opposite directions to form the third bent section 253 and the fourth bent section 254. For example, as shown in FIG. 3, the second stacked portion 252 is bent counterclockwise to form the third bent section 253, and then the second stacked portion 252 extends upward to form a third connecting section 255. Subsequently, the second stacked portion is bent clockwise to form a fourth bent section 254. Afterward, the second stacked portion 252 extends downward to form a fourth connecting section 256. The fourth connecting section 256 is connected to the second adapter piece 41.

Because the structure of the second tab group 25 in this embodiment of this application is the same as or similar to the structure of the first tab group 24, the structures not described in the description about the second tab group 25 may be learned by referring to the structure of the first tab group 24 described above, details of which are omitted here. Similarly, because the structure of the second adapter piece 41 is the same as or similar to the structure of the first adapter piece 31, the structures not described in the description about the second adapter piece 41 may be learned by referring to the structure of the first adapter piece 31 described above, details of which are omitted here.

The electrochemical device 1 of this application includes a package 10, an electrode assembly 20, and a first adapter piece 31. The electrode assembly 20 is accommodated in the package 10. The electrode assembly 20 includes a first tab group 24. A first end of the first tab group 24 is electrically connected to the electrode assembly 20. The first tab group 24 is electrically connected to a first end of the first adapter piece 31 to form a first connecting portion 247. A second end of the first adapter piece 31 extends out of the package 10. A part that, in the first tab group 24, electrically connects the electrode assembly 20 and the first connecting portion 247, includes at least a first bent section 243 and a second bent section 244. The first bent section 243 and the second bent section 244 are bent in opposite directions, so that the first tab group 24 located inside the package 10 is substantially in the shape of an "S".

With the first tab group 24 designed into the above structure, the first tab group 24 that includes a first bent section 243 and a second bent section 244 possesses elastic stretch properties when the electrode assembly 20 moves relative to the package 10 during abnormal use such as dropping or violent impact of the electrochemical device 1, so that the electrode assembly 20 keeps electrically connected to the first adapter piece 31. The first tab group 24 can cushion and reduce the stress transmitted from the first adapter piece 31 to the electrode assembly 20, so as to reduce the probability of breakage at the junction between the first tab group 24 and the electrode assembly 20.

This application further provides an electrical device embodiment. The electrical device includes the electrochemical device. The specific structure and effects of the electrochemical device may be learned by referring to the above embodiment, details of which are omitted here.

For ease of understanding the technical solutions and beneficial effects of the electrochemical device according to an embodiment of this application, the following describes a lithium-ion pouch battery as an example.

This application improves the structures of the first tab group and the second tab group of the electrode assembly in the lithium-ion pouch battery. For the lithium-ion pouch battery, the preparation process and the structure of the packaging bag, the first electrode plate, the second electrode plate, and the separator may be the corresponding preparation process and structure available in the prior art.

### Embodiment 1

A part that, in the first tab group in the electrode assembly, electrically connects the electrode assembly and the first connecting portion, includes one first bent section and one second bent section (as shown in FIG. 2 or FIG. 3). In other words, the first bent section, the first connecting section, the second bent section, and the second connecting section are connected in sequence. A part that, in the second tab group in the electrode assembly, electrically connects the electrode assembly and the second connecting portion, includes one third bent section and one fourth bent section. In other words, the third bent section, the third connecting section, the fourth bent section, and the fourth connecting section are connected in sequence.

### Embodiment 2

A part that, in the first tab group in the electrode assembly, electrically connects the electrode assembly and the first connecting portion, includes two first bent sections and one second bent section. In other words, the first bent section, the first connecting section, the second bent section, the second connecting section, and the first bent section are connected in sequence. Apart that, in the second tab group in the electrode assembly, electrically connects the electrode assembly and the second connecting portion, includes two third bent sections and one fourth bent section. In other words, the third bent section, the third connecting section, the fourth bent section, the fourth connecting section, and the third bent section are connected in sequence.

### Embodiment 3

A part that, in the first tab group in the electrode assembly, electrically connects the electrode assembly and the first connecting portion, includes two first bent sections and two second bent sections (as shown in FIG. 4). In other words, the first bent section, the first connecting section, the second bent section, the second connecting section, the first bent section, the second connecting section, and the second bent section are connected in sequence. A part that, in the second tab group in the electrode assembly, electrically connects the electrode assembly and the second connecting portion, includes two third bent sections and two fourth bent sections. In other words, the third bent section, the third connecting section, the fourth bent section, the fourth connecting section, the third bent section, the fourth connecting section, and the fourth bent section are connected in sequence.

### Comparative Embodiment 1

A part that, in the first tab group in the electrode assembly, electrically connects the electrode assembly and the first connecting portion, includes no bent section (as shown in FIG. 7). In other words, the first tab group is directly connected to the first adapter piece. A part that, in the second tab group, electrically connects the electrode assembly and the second connecting portion, includes no bent section. In other words, the second tab group is directly connected to the second adapter piece.

### Comparative Embodiment 2

A part that, in the first tab group in the electrode assembly, electrically connects the electrode assembly and the first connecting portion, includes one first bent section (as shown in FIG. 8), but includes no second bent section. In other words, the first tab group is bent once and then connected to the first adapter piece. A part that, in the second tab group, electrically connects the electrode assembly and the second connecting portion, includes one third bent section. In other words, the second tab group is bent once and then connected to the second adapter piece.

Drop test: The batteries in the above embodiments and comparative embodiments are subjected to a drop test in groups, and each group includes 20 lithium-ion pouch batteries.

A drop test process is as follows:
1. Pre-treating a lithium-ion battery at 25 °C, leaving the battery to stand at a normal temperature for 60 minutes, and then measuring the voltage, internal resistance, and capacity.
2. Fixing the lithium-ion battery into a special-purpose jig.
3. Dropping the battery downward freely from a height of 1.8 m for 7 rounds by using a special-purpose drop tester. In each round, letting the following 6 parts of the battery hit the landing point sequentially: head, tail, right head corner, right tail corner, left head corner, left tail corner (angle: 45±15 degrees).
4. Checking the battery status after completion of each round of test, and stopping the drop test if the lithium-ion battery leaks electrolyte, heats up, smokes, catches fire, or incurs a voltage drop of 50 mV or more. Leaving the lithium-ion battery to stand at a normal temperature for 24 hours after completion of the drop test, and then measuring the voltage and internal resistance of the battery.
5. Evaluation criteria: The test is passed if no fire or electrolyte leak occurs and the voltage drop is less than 50 mV. The test results are recorded in Table 1 below.

**Table 1**

| Embodiment | Number of failed specimens/total number of specimens |
|---|---|
| Comparative Embodiment 1 | 20/20 |
| Comparative Embodiment 2 | 18/20 |
| Embodiment 1 | 0/20 |
| Embodiment 2 | 0/20 |
| Embodiment 3 | 0/20 |

Conclusion: As can be seen from Comparative Embodiments 1 and 2 and Embodiments 1 to 3, a part that, in the first tab group of the electrode assembly, electrically connects the electrode assembly and the first connecting portion, is set to include at least one first bent section and one second bent section, thereby effectively reducing the probability of breakage at the junction between the first tab group and the electrode assembly, and improving the safety of the lithium-ion battery.

What is described above is merely some embodiments of this application, and does not limit the patent scope of this application in any way. All equivalent structural variations and equivalent process variations made by using the content of the specification and the drawings of this application, and the content hereof used directly or indirectly in other related technical fields, still fall within the patent protection scope of this application.

## Claims

1. An electrochemical device (1), comprising a package (10), an electrode assembly (20), and a first adapter piece (31); wherein the electrode assembly (20) comprises a first tab group (24); the electrode assembly (20) is accommodated in the package (10); a first end of the first tab group (24) is electrically connected to the electrode assembly (20); a second end of the first tab group (24) is electrically connected to a first end of the first adapter piece (31) to form a first connecting portion (247); and a second end of the first adapter piece (31) extends out of the package (10); **characterized in that**,
a part of the first tab group (24) electrically connects the electrode assembly (20) and the first connecting portion (247), the part of the first tab group (24) comprises a first bent section (243) and a second bent section (244); and
the first bent section (243) and the second bent section (244) are bent in opposite directions.

2. The electrochemical device (1) according to claim 1, **characterized in that**,
the electrode assembly (20) comprises a plurality of first electrode plates (21), a plurality of separators (23), and a plurality of second electrode plates (22);
each of the separators (23) is provided between one of the first electrode plates (21) and one of the second electrode plates (22);
the first tab group (24) comprises a plurality of first sub-tabs (241);
one of the first sub-tabs (241) is electrically connected to one of the first electrode plates (21);
the plurality of first sub-tabs (241) are stacked together to form a first stacked portion (242); and
the first stacked portion (242) is bent to form the first bent section (243) and the second bent section (244).

3. The electrochemical device (1) according to claim 2, **characterized in that**,
the first tab group (24) further comprises a first connecting section (245) and a second connecting section (246);
the first bent section (243), the first connecting section (245), the second bent section (244), the second connecting section (246), and the first adapter piece (31) are connected in sequence;
of the first bent section (243) and the second bent section (244), one is bent along a first direction, and the other is bent along a second direction, and
the first direction is opposite to the second direction.

4. The electrochemical device (1) according to claim 3, **characterized in that**,
a length of the first connecting section (245) is greater than or equal to a length of the second connecting section (246).

5. The electrochemical device (1) according to any one of claims 1 to 4, **characterized in that**,
the electrochemical device (1) further comprises a first adhesive-sealant (32);
the first adhesive-sealant (32) is provided on the first adapter piece (31); and
the first adhesive-sealant (32) seals the first adapter piece (31) and the package (10).

6. The electrochemical device (1) according to claim 5, **characterized in that**,
a length L1 of the first adapter piece (31) located between the first connecting portion (247) and the first adhesive-sealant (32) satisfies: 0.2 mm ≤ L1 ≤ 10 mm.

7. The electrochemical device (1) according to claim 5, **characterized in that**,
the electrochemical device (1) further comprises a first insulation tape group (33);
the first insulation tape group (33) covers the first tab group (24) and a part of the first adapter piece (31), the part of the first adapter piece (31) is located between the first adhesive-sealant (32) and the first tab group (24); and
the first insulation tape group (33) further covers a part of the electrode assembly (20) and a part of the first adhesive-sealant (32).

8. The electrochemical device (1) according to any one of claims 1 to 7, **characterized in that**,
the electrochemical device (1) further comprises a second adapter piece (41);
the electrode assembly (20) further comprises a second tab group (25);
a first end of the second tab group (25) is electrically connected to the electrode assembly (20);
a second end of the second tab group (25) is electrically connected to a first end of the second adapter piece (41) to form a second connecting portion (257);
a second end of the second adapter piece (41) extends out of the package (10);
a part of the second tab group (25) electrically connects the electrode assembly (20) and the second connecting portion (257), the part of the second tab group (25) comprises a third bent section (253) and a fourth bent section (254); and
the third bent section (253) and the fourth bent section (254) are bent in opposite directions.

9. The electrochemical device (1) according to claim 8, **characterized in that**,
the second tab group (25) comprises a plurality of second sub-tabs (251);
one of the second sub-tabs (251) is electrically connected to one of the second electrode plates (22);
the plurality of second sub-tabs (251) are stacked together to form a second stacked portion (252); and
the second stacked portion (252) is bent to form the third bent section (253) and the fourth bent section (254).

10. An electrical device, **characterized in that**, the electrical device comprises the electrochemical device (1) according to any one of claims 1 to 9.
